(19) Europäisches Patentamt
European Patent Office
Office européen des brevets

(11) **EP 4 242 691 A1**

(12) **EUROPEAN PATENT APPLICATION**

(43) Date of publication:
**13.09.2023 Bulletin 2023/37**

(21) Application number: **22160719.5**

(22) Date of filing: **08.03.2022**

(51) International Patent Classification (IPC):
**G01S 17/89** (2020.01)   **G06V 10/44** (2022.01)

(52) Cooperative Patent Classification (CPC):
**G06V 20/588; G01S 7/4802; G01S 7/4808;
G01S 17/10; G01S 17/42; G01S 17/86;
G01S 17/89; G01S 17/931; G06V 10/82**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **Hyundai Mobis Co., Ltd.
Gangnam-gu
Seoul 06141 (KR)**

(72) Inventors:
• **Bhargava, Adit
60594 Frankfurt am Main (DE)**

• **Tsanev, Doychin
69533 Frankfurt am Main (DE)**
• **Chernikov, Oleg
65760 Eschborn (DE)**
• **Lukic, Luka
65719 Hofheim am Taunus (DE)**

(74) Representative: **dompatent von Kreisler Selting
Werner -
Partnerschaft von Patent- und Rechtsanwälten
mbB
Deichmannhaus am Dom
Bahnhofsvorplatz 1
50667 Köln (DE)**

(54) **METHOD AND APPARATUS FOR DETECTING LANE USING LIDAR**

(57)   There is provided methods and apparatuses for detecting a lane using a light detection and ranging (LiDAR), the apparatus including a processor configured to generate a range image based on a LiDAR point cloud acquired from the LiDAR, and acquire at least one lane data by detecting at least one lane area present in the range image using a trained lane detection model.

FIG. 4

EP 4 242 691 A1

## Description

<u>BACKGROUND</u>

1. Field

The present disclosure relates to a method and apparatus for detecting lane using a light detection and ranging (LiDAR).

2. Discussion of Related Art

The statements in this section merely provide background information related to the present disclosure and do not necessarily constitute prior art.

Lane recognition is a technology that enables lane keeping, driving route planning, etc., and therefore one of the most important factors of autonomous vehicles. For example, an accurate lane detection is essential in advanced driver assistance systems (ADAS) such as lane keeping assist system (LKAS) or lane departure warning system (LDWS).

Cameras are mainly used for lane detection in autonomous vehicles. A camera system mounted in an autonomous vehicle captures an image in front of the vehicle and detects a lane from the captured image using an existing image processing algorithm or deep neural network (DNN).

Such a camera-based lane detection system is vulnerable to an illumination environment in view of the characteristics of image sensors. For example, lane detection may fail in a low illumination environment such as a night time or due to light of a headlamp of another vehicle on the road.

In addition, it is difficult to accurately estimate the distance with a single camera or even with a stereo camera system having a narrow baseline.

Meanwhile, a LiDAR, which uses reflectance information of a target point with a wide field of view (FoV), is not affected by illumination. The LiDAR detects a distance between a vehicle and a target by emitting a pulse of light to a target point in front of the vehicle and measuring a time for the light pulse to return.

The LiDAR scans a detection area in front of the vehicle including a plurality of points and generates a three-dimensional (3D) point cloud for the detection area including detection information obtained from each of the plurality of points. A method for the lane detection system to detect a lane in the point cloud includes a method of applying a human-coded heuristic algorithm. However, a lane marking type, a color of a lane marking, road topology, and a traffic scenario are diverse and variable, and therefore it is difficult to code the heuristic algorithm for various and all road conditions.

In addition, the LiDAR has the characteristics of 'sparsity', in which density of the point cloud decreases as a distance between a road to be measured and a sensor increases. The LiDAR is inevitably dependent on a local signal processing method, and therefore has a limited lane detection capability.

<u>SUMMARY</u>

This Summary is provided to introduce a selection of concepts in a simplified form that are further described below in the Detailed Description. This Summary is not intended to identify key features or essential features of the claimed subject matter, nor is it intended to be used as an aid in determining the scope of the claimed subject matter.

In one general aspect, there is provided an apparatus for detecting a lane using a light detection and ranging (LiDAR), the apparatus including a processor configured to generate a range image based on a LiDAR point cloud acquired from the LiDAR, and acquire at least one lane data by detecting at least one lane area present in the range image using a trained lane detection model.

The processor may be configured to extract at least one feature from the range image using a first model, detect a point set predicted as the at least one lane area based on the at least one feature using a second model, and acquire the at least one lane data corresponding to the point set.

The at least one lane data may include any one or any combination of a confidence score of the at least one lane area, an upper endpoint value of the at least one lane area, a lower endpoint value of the at least one lane area, and a polynomial coefficient for the at least one lane area.

The processor may be configured to display a lane on the LiDAR point cloud using the at least one lane data.

The apparatus may include a memory configured to store one or more instructions, and the processor is further configured to execute the one or more instructions to generate the range image and to acquire the at least one lane data.

In another general aspect, there is provided a processor-implemented method for detecting a lane using a light detection and ranging (LiDAR), the method including generating a range image based on a LiDAR point cloud acquired from the LiDAR, and acquiring at least one lane data by detecting at least one lane area present in the range image using a trained lane detection model.

The acquiring of the at least one lane data may include extracting at least one feature from the range image using a first model, detecting a point set predicted as the at least one lane area based on the at least one feature using a second model, and acquiring the at least one lane data corresponding to the point set.

The at least one lane data may include any one or any combination of confidence scores of the at least one lane area, an upper endpoint value of the at least one lane area, a lower endpoint value of the at least one lane area, and a polynomial coefficient for the at least one lane area.

The method may include displaying a lane on the LiDAR point cloud using the at least one lane data.

In another general aspect, there is provided a processor-implemented method for training a lane detection model using a light detection and ranging (LiDAR), the method including generating a range image based on a plurality of LiDAR point clouds, acquiring at least one lane data by predicting at least one lane present in the range image using a lane detection model, calculating a loss based on a ground truth lane data and the at least one lane data using a loss function, and updating at least one weight of the lane detection model based on the loss.

The LiDAR point cloud may include at least one annotated lane.

The loss function may calculate the loss using any one or any combination of a loss function associated with a confidence score of the at least one lane data, a loss function associated with an upper endpoint value of the at least one lane, a loss function associated with a lower endpoint value of the at least one lane, and a loss function associated with a polynomial coefficient for the at least one lane.

Each of the loss function associated with the confidence score of the at least one lane data, the loss function associated with the upper endpoint value of the at least one lane, the loss function associated with the lower endpoint value of the at least one lane, and the loss function associated with the polynomial coefficient for the at least one lane may be combined with a balance weight for each corresponding loss function.

The loss function associated with the confidence score of the at least one lane data may calculate the loss using a binary cross entropy.

The loss function associated with the upper endpoint value of the at least one lane, the loss function associated with the lower endpoint value of the at least one lane, and the loss function associated with the polynomial coefficient for the at least one lane may calculate the loss using a mean squared error.

Other features and aspects will be apparent from the following detailed description, the drawings, and the claims.

## BRIEF DESCRIPTION OF THE DRAWINGS

FIG. 1 is a diagram of an apparatus for detecting a lane using a LiDAR according to an embodiment of the present disclosure.

FIG. 2 is a diagram illustrating a process of acquiring lane data using a lane detection model according to an embodiment of the present disclosure.

FIG. 3 is a diagram illustrating a process of training a lane detection model according to an embodiment of the present disclosure.

FIG. 4 is a diagram illustrating a process in which an apparatus for detecting a lane using a LiDAR detects a lane according to an embodiment of the present disclosure.

FIG. 5 is a flowchart illustrating a method for detecting a lane using a LiDAR according to an embodiment of the present disclosure.

Throughout the drawings and the detailed description, unless otherwise described or provided, the same drawing reference numerals will be understood to refer to the same elements, features, and structures. The drawings may not be to scale, and the relative size, proportions, and depiction of elements in the drawings may be exaggerated for clarity, illustration, and convenience.

## DETAILED DESCRIPTION

The following detailed description is provided to assist the reader in gaining a comprehensive understanding of the methods, apparatuses, and/or systems described herein. However, various changes, modifications, and equivalents of the methods, apparatuses, and/or systems described herein will be apparent after an understanding of the disclosure of this application. For example, the sequences of operations described herein are merely examples, and are not limited to those set forth herein, but may be changed as will be apparent after an understanding of the disclosure of this application, with the exception of operations necessarily occurring in a certain order. Also, descriptions of features that are known may be omitted for increased clarity and conciseness.

The features described herein may be embodied in different forms, and are not to be construed as being limited to the examples described herein. Rather, the examples described herein have been provided merely to illustrate some of the many possible ways of implementing the methods, apparatuses, and/or systems described herein that will be apparent after an understanding of the disclosure of this application.

The terminology used herein is for the purpose of describing particular examples only and is not to be limiting of the examples. The singular forms "a", "an", and "the" are intended to include the plural forms as well, unless the context clearly indicates otherwise. It will be further understood that the terms "comprises/comprising" and/or "includes/including" when used herein, specify the presence of stated features, integers, steps, operations, elements, and/or components, but do not preclude the presence or addition of one or more other features, integers, steps, operations, elements, components and/or groups thereof.

Also, in the description of the components, terms such as first, second, A, B, (i), (i), (a), (b) or the like may be used herein when describing components of the present disclosure. These terms are used only for the purpose of discriminating one constituent element from another constituent element, and the nature, the sequences, or the orders of the constituent elements are not limited by the terms. When one constituent element is described as being "connected", "coupled", or "attached" to another constituent element, it should be understood that one constituent element can be connected or attached directly to another constituent element, and an intervening constituent element can also be "connected", "coupled", or "attached" to the constituent elements.

When describing the examples with reference to the accompanying drawings, like reference numerals refer to like constituent elements and a repeated description related thereto will be omitted. In the description of examples, detailed description of well-known related structures or functions will be omitted when it is deemed that such description will cause ambiguous interpretation of the present disclosure.

The detailed description to be disclosed hereinafter together with the accompanying drawings is intended to describe illustrative embodiments of the present disclosure and is not intended to represent the only embodiments in which the present disclosure may be practiced.

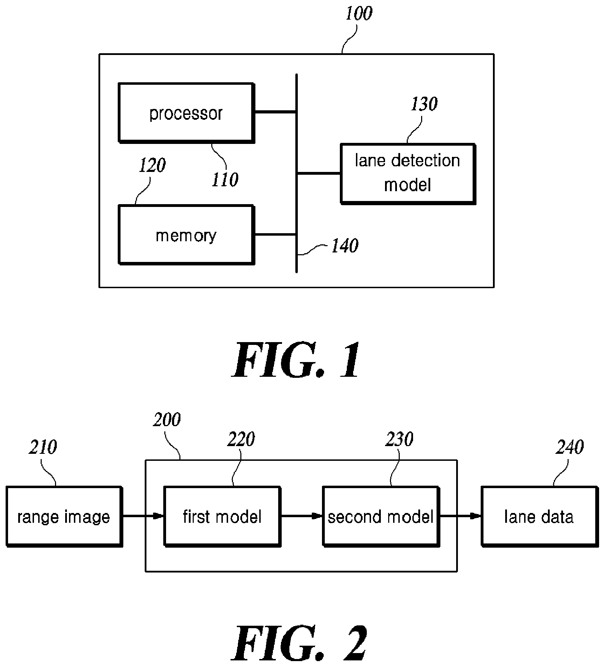

FIG. 1 is a block diagram of an apparatus for detecting a lane using a LiDAR according to an embodiment of the present disclosure.

Referring to FIG. 1, an apparatus 100 for detecting a lane using a LiDAR according to an embodiment includes a processor 110, a memory 120, and a lane detection model 130. Here, the processor 110, the memory 120, and the lane detection model 130 included in the apparatus 100 for detecting a lane using a LiDAR may transmit data to each other through a bus 140. The bus 140 may include a wireless or wired communication infrastructure enabling interaction between various components of the apparatus 100 for detecting a lane using a LiDAR.

According to an embodiment, the apparatus 100 for detecting a lane using a LiDAR may be mounted in a general vehicle as a driver's driving assistance device, and may be mounted in an autonomous vehicle for use in vehicle control.

The processor 110, which is a component for detecting a drivable road area and lane using a LiDAR data, may include or be part of any device capable of processing a sequence of instructions. For example, the processor 110 may include a computer processor, a processor in a mobile device, or other electronic device or a digital processor.

The processor 110 acquires a point cloud from a LiDAR. Here, the point cloud is a point set ("point set"), in a three-dimensional (3D) space, generated based on a plurality of pieces detection information generated by scanning a preset detection area by the LiDAR.

The preset detection area may include a vertical field of view (VFOV) and a horizontal field of view (HFOV) or a LiDAR mounted in a vehicle to detect a lane existing in the drivable area in front of the autonomous vehicle.

Each point included in the point cloud includes at least one of information on a direction of a corresponding point in the detection area, information on a height, information on a distance, and reflectance information for laser light of a specific frequency.

The processor 110 generates a range image based on the point cloud. The range image is an image generated by mapping each point of the point cloud on a two-dimensional (2D) plane. Here, a pixel value on the range image may be determined based on reflectance information for laser light of a specific frequency of a point corresponding to the pixel.

The processor 110 detects one or more lane areas from the range image using the trained lane detection model 130, and acquires lane data for each lane area. Here, the lane data includes a confidence score of the lane area, an upper endpoint value of the lane area, a lower endpoint value of the lane area, and a polynomial coefficient for the lane area.

The processor 110 displays at least one lane on the point cloud based on lane data acquired using the lane detection model 130.

The memory 120 may include a volatile memory, a permanent memory, a virtual memory, or other memories for storing information used by or output by the apparatus 100 for detecting a lane using a LiDAR. For example, the memory 120 may include a random access memory (RAM) or a dynamic RAM (DRAM). The memory 120 may store a program for processing or controlling the processor 110 and various data for an operation of the apparatus 100 for detecting a lane using a LiDAR.

The lane detection model 130 detects at least one lane area existing in the range image and outputs at least one lane data. Here, the lane detection model 130 may include at least one pre-trained model according to a deep learning algorithm.

The lane detection model 130 extracts at least one feature from the range image. Here, the lane detection model 130 is generated according to a result of pre-training range images for a plurality of point clouds using a preset deep learning algorithm.

The preset deep learning algorithm may include a convolutional neural network (CNN). In addition to the convolutional neural network, the deep neural network may be combined with a recurrent neural network (RNN) and generated according to a trained result.

The lane detection model 130 detects a point set predicted as a lane area from the extracted feature. A plurality of points predicted to correspond to the same lane area constitutes one set, and the point set has the same number as the number of predicted lane areas. For example, up to 15 lane areas may be predicted at the same time.

The lane detection model 130 outputs individual lane data of at least one predicted lane area. Here, the lane data includes at least one of a confidence score of the corresponding lane area, an upper endpoint value of the corresponding lane area, a lower endpoint value of the corresponding lane area, and a polynomial coefficient for the corresponding lane area.

The confidence score of the corresponding lane area is a value representing the confidence of the lane data output by the lane detection model 130 and has a value of 0 or 1.

The upper endpoint value of the corresponding lane area is a value associated with the coordinates of the uppermost point among a plurality of points included in the corresponding lane area, and the lower endpoint value of the corresponding lane area is a value of a point positioned at the lowermost end among a plurality of points included in the corresponding lane area.

For example, the horizontal direction is set as a y-axis and the vertical direction is set as an x-axis based on the traveling direction of the autonomous vehicle on the range image. On the range image, points within the corresponding lane area have x-y coordinate values. Among the x-coordinate values of the plurality of points in the same lane area, the largest value may be the upper endpoint value, and the smallest value may be the lower endpoint value.

The polynomial coefficient for the corresponding lane area is a polynomial coefficient representing a curve formed by a plurality of points within the corresponding lane area. The polynomial coefficient for the corresponding lane area may be determined based on coordinates of points within the corresponding lane area in the range image.

The degree of a polynomial may be arbitrarily determined. For example, the degree of the polynomial may be determined to be a third degree, and in this case, the polynomial has a total of four coefficients.

The apparatus 100 for detecting a lane using a LiDAR may include more components than those of FIG. 1. For example, the apparatus 100 for detecting a lane using a LiDAR may further include a network interface for providing information on at least one lane detected based on lane data to a control system of the autonomous vehicle, for example, an advanced driver assistance system (ADAS) such as a lane keeping assist system (LKAS) or a departure warning system (LDWS).

FIG. 2 is a diagram illustrating a process of acquiring lane data using a lane detection model according to an embodiment of the present disclosure.

Referring to FIG. 2, a lane detection model 200 includes a first model 220 for extracting a feature of an input range image 210 and a second model 230 for predicting at least one lane area and outputting lane data 240 for each lane area.

A 3D point cloud is first encoded into a 2D range image 210 and then input to the first model 220 responsible for feature extraction. The first model 220 is a model trained using a deep learning algorithm to extract at least one feature of the range image 210.

The second model 230 predicts at least one lane area based on the extracted feature of the range image. Here, the second model 230 may include a fully connected layer capable of simultaneously predicting a plurality of lane areas from the range image 210 generated based on one point cloud.

The second model 230 outputs lane data 240 regarding the predicted lane area using a polynomial regression analysis. The lane data 240 for the corresponding lane area is calculated using the coordinates of a plurality of points included in the same lane area in the range image 210.

The lane data 240 includes $(3+(K+1))$ parameters for each predicted lane area. For example, when the number of lane areas predicted by the second model 230 is N, the lane data 240 includes an N parameter list including $(3+(K+1))$ parameters.

The lane data 240 includes a parameter list including a confidence score, an upper endpoint value of the lane area, a lower endpoint value of the lane area, and $(K+1)$ coefficients of a K-degree polynomial for the lane area. Here, the K-degree polynomial is a K-degree polynomial representing a lane modeled based on a plurality of points within the same lane area, and K is an arbitrarily set number. For example, the polynomial for the lane area may be set as a third-degree polynomial in which K is 3.

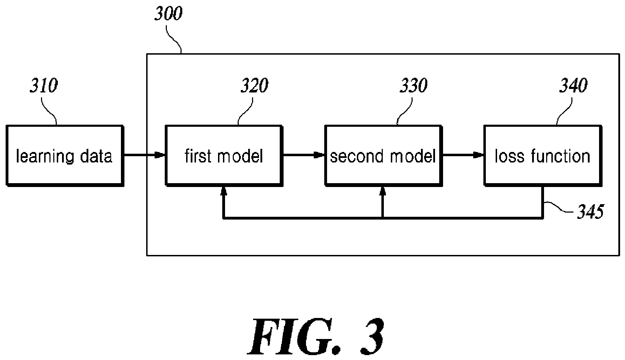

FIG. 3 is a diagram illustrating a process of training a lane detection model according to an embodiment of the present disclosure.

Referring to FIG. 3, a lane detection model 300 is trained using learning data 310. Here, the learning data 310 may include a plurality of LiDAR point clouds including at least one ground truth lane.

The learning data 310 may be a plurality of 3D LiDAR point clouds generated using a LiDAR. The LiDAR point cloud has at least one annotated lane.

Each annotated lane in the point cloud includes a preset number of points. Here, the preset number is an arbitrarily selected number of points used to express the polynomial for the annotated lane.

Each point on the point cloud has coordinates according to a position on a preset coordinate plane. For example, a portion corresponding to a ground on the point cloud may be set as a region of interest (ROI), and a direction in which the vehicle travels in the set ROI is set as the x-axis and a lateral direction of the vehicle is set as the $\gamma$-axis. Each point on the set x-y coordinate plane has an x-coordinate and a $\gamma$-coordinate.

For one annotated lane, an x-coordinate value of a point having the smallest x-coordinate value among a plurality of points included in the lane is set as a ground truth lower endpoint value of lane (*low**), and an x-coordinate value of a point having the largest x-coordinate value is set as a ground truth upper endpoint value of lane (*up**).

A ground truth confidence score ($C^*$) for each of the annotated lanes is calculated based on Equation 1.

[Equation 1]

$$c^* = \begin{cases} 1, & if, \ \ j \leq L \\ 0, & otherwise \end{cases}$$

Here, L is the number of annotated lanes included in the point cloud, and j is a value from 0 to L assigned to each annotated lane.

A first model 320 is trained to extract features from the learning data. A range image generated from the learning data 310 is input to the first model 320, and the first model 320 extracts features from the range image.

A second model 330 is trained to detect a set of at least one lane predicted as a lane from the features extracted by the first model 320 and predict the corresponding lane data from the point set.

When the second model 330 predicts N lanes, N lane data $L_i$ (*i* is 1 to N) from $L_1$ to $L_N$ is predicted. The lane data includes a confidence score of predicted lane ($C_i$), an upper endpoint value of predicted lane ($up_i$), a lower endpoint value of predicted lane ($low_i$), and a y coordinate value of predicted lane (Yi). Here, the $\gamma$-coordinate value (Yi) of the predicted lane is a value of a polynomial expressing the predicted lane and is a function of x. The $\gamma$-coordinate value ($y_i$) is calculated based on Equation (2).

[Equation 2]

$$y_i = \sum_{k=0}^{K} a_{k,i} \, x^k$$

Here, K is the degree of polynomial with respect to x and is an arbitrarily set value. For example, in consideration of a form of the predicted lane, K may be set to 3. $a_{k,i}$ is a coefficient of a *k*-degree term of x in the polynomial, and may be determined using coordinate values of a plurality of points included in the predicted lane.

Loss is calculated using a loss function 330 based on the predicted lane confidence score ($C_i$) included in the lane data $L_i$ predicted by the second model 330, the predicted upper endpoint value ($up_i$), the predicted lower endpoint value ($low_i$), and the y-coordinate value ($y_i$), a preset ground truth confidence score ($C^*$) a ground truth upper endpoint value ($up^*$), a ground truth lower end point value ($low^*$), and a ground truth lane y coordinate value ($y^*$). Here, the loss function 340 is expressed by Equation (3).

[Equation 3]

$$Loss = W_c L_{cls}(c_i, c^*) + W_l L_{reg}(low_i, low^*) +$$
$$W_u L_{reg}(up_i, up^*) + W_p L_{reg}(y_i, y^*)$$

The loss function 340 is a multi-task loss function. The loss is calculated using the sum of the loss function associated with the confidence score, the loss function associated with the upper endpoint value, the loss function associated with the lower endpoint value, and the loss function associated with the $\gamma$-coordinate value for the lane.

The loss function associated with the confidence score is a function ($L_{cls}$) that calculates the loss using a binary cross entropy (BCE). The loss function associated with the upper endpoint value, the loss function associated with the lower endpoint value, and the loss function associated with the $\gamma$-coordinate value for the lane are functions that calculate the loss using a mean squared error (MSE).

$W_c$, $W_l$, $W_u$ and $W_p$ are balancing weights of each loss function.

The lane detection model 300 is trained to minimize the loss calculated using the loss function 340. The lane detection model 300 updates at least one weight of a model until training is completed through a backpropagation algorithm using the calculated loss.

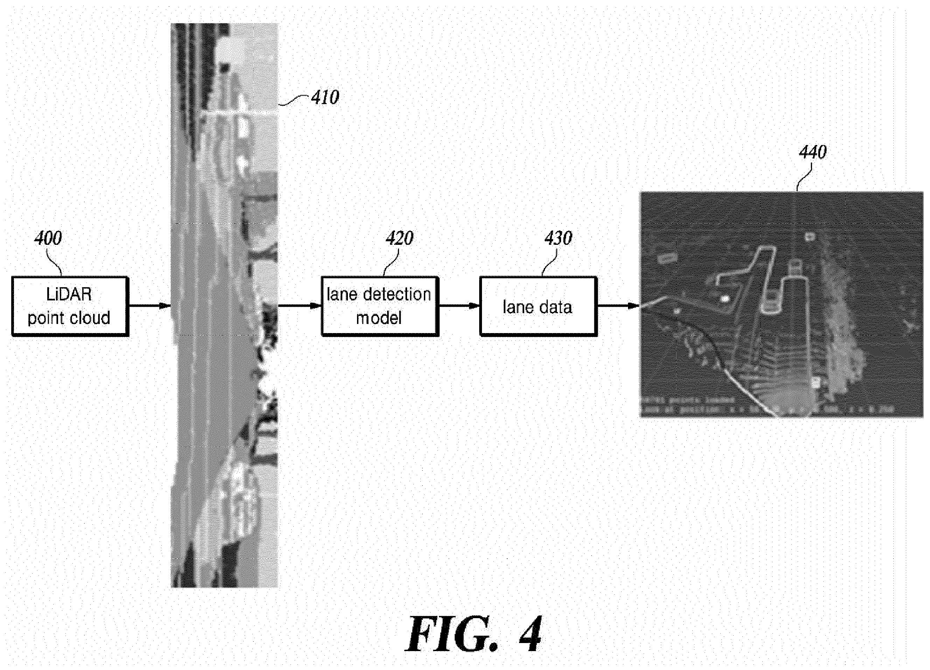

FIG. 4 is a diagram illustrating a process in which an apparatus for detecting a lane using a LiDAR detects a lane according to an embodiment of the present disclosure.

The apparatus for detecting a lane using a LiDAR generates a 2D range image 410 based on a 3D LiDAR point cloud 400. The range image 410 is generated by mapping points constituting the 3D LiDAR point cloud 400 on a 2D plane.

The apparatus for detecting a lane using a LiDAR detects at least one lane area included in the range image 410 by inputting the 2D range image 410 to the trained lane detection model 420.

The trained lane detection model 420 extracts a feature from the input range image 410 and detects a set of one or more points predicted to be a lane area using the extracted feature.

One point set refers to one lane area. The lane detection model 420 outputs lane data 430 corresponding to each point set.

The lane data 430 includes at least one of the confidence score of the corresponding lane area, the x-coordinate value of the upper endpoint among a plurality of points corresponding to the corresponding lane area, the x-coordinate value of the lower endpoint among the plurality of points corresponding to the corresponding lane area, and a polynomial coefficient for the corresponding lane area.

The apparatus for detecting a lane using a LiDAR may display at least one lane on the point cloud based on the lane data 430.

The x-y coordinates of the upper and lower endpoints of the lane area are calculated by substituting the x-coordinate value of the upper endpoint and the x-coordinate value of the lower endpoint into the polynomial for the lane area determined by the polynomial coefficient included in the lane data 430.

A portion of a curve corresponding to between the upper endpoint and the lower endpoint on a curve expressed by a polynomial for the lane area may be determined as the corresponding lane and displayed on the point cloud.

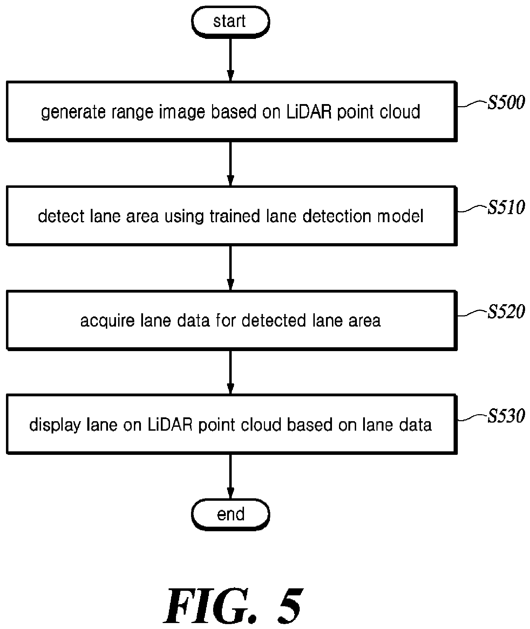

FIG. 5 is a flowchart illustrating a method for detecting a lane using a LiDAR according to an embodiment of the present disclosure.

Referring to FIG. 5, the apparatus for detecting a lane using a LiDAR generates a range image based on a LiDAR point cloud (S500).

An apparatus for detecting a lane using a LiDAR acquires a 3D LiDAR point cloud from a LiDAR. A range image is generated by mapping each point of the acquired LiDAR point cloud to a corresponding position on a 2D plane. Here, a pixel value on the range image may be determined based on reflectance information for laser light of a specific frequency of a point corresponding to the pixel.

The apparatus for detecting a lane using a LiDAR detects one or more lane areas from the range image using the trained lane detection model (S510).

The trained lane detection model extracts at least one feature from the range image. Here, the lane detection model is generated according to a result of pre-training range images for a plurality of point clouds including at least one lane area using a preset deep learning algorithm. The preset deep learning algorithm may include, but is not limited to, a convolutional neural network (CNN), and may be combined with a recurrent neural network (RNN) in addition to the convolutional neural network and generated according to a trained result.

The lane detection model detects a point set predicted as a lane from the extracted feature as a lane area. Here, the lane detection model may simultaneously detect a plurality of lane areas. For example, the lane detection model may simultaneously detect up to 15 lane areas.

The apparatus for detecting a lane using a LiDAR acquires lane data for at least one detected lane area (S520). Here, the lane data includes at least one of a confidence score of the corresponding lane area, an upper endpoint value of the corresponding lane area, a lower endpoint value of the corresponding lane area, and a polynomial coefficient for the corresponding lane area.

The confidence score of the corresponding lane area is a value indicating the confidence of the lane data and has a value of 0 or 1. The upper endpoint value of the corresponding lane area is a value related to the coordinates of the uppermost point among a plurality of points included in the corresponding lane area, and the lower endpoint value of the corresponding lane area is a value related to the coordinates of the lowermost point among a plurality of points included in the corresponding lane area.

The polynomial coefficient for the corresponding lane area is a polynomial coefficients expressing a lane composed of a plurality of points within the corresponding lane area. The polynomial coefficients for the corresponding lane area may be determined based on the coordinates of a plurality of points within the corresponding lane area in the range image. Here, the degree of the polynomial may be arbitrarily determined.

The apparatus for detecting a lane using a LiDAR displays at least one lane on the point cloud based on the acquired lane data (S530).

A position and a form of the lane may be determined based on the upper endpoint value and the lower endpoint value corresponding to the detected lane area, and the polynomial coefficient for the lane area. A section corresponding to the lane is determined using the upper endpoint value and the lower endpoint value among the lines expressed by the polynomial for the lane area.

The apparatus for detecting a lane using a LiDAR may display the lane by mapping a line determined as a section corresponding to the lane to a corresponding position on the point cloud.

In the flowchart, the processes are described as being sequentially executed, but merely illustrate the technical spirit of some embodiments of the present disclosure. In other words, a person having ordinary skill in the art to which some embodiments of the present disclosure pertain may variously modify and apply the present disclosure by changing and executing the processes described in the flowchart or executing one or more of the processes in parallel without departing from an intrinsic feature of some embodiments of the present disclosure, and thus the flowchart is not limited to a time-series sequence.

Various implementations of the systems and techniques described herein may be realized by digital electronic circuitry, integrated circuits, field programmable gate arrays (FPGAs), application specific integrated circuits (ASICs), computer hardware, firmware, software, and/or combinations thereof. These various implementations may include implementation as one or more computer programs executable on a programmable system. The programmable system includes at least one programmable processor (which may be a special-purpose processor or a general-purpose processor) coupled to receive data and instructions from a storage system, at least one input device, and at least one output device and transmit data and instructions thereto. Computer programs (also known as programs, software, software applications or code) include instructions for a programmable processor and are stored in a "computer-readable medium".

The computer-readable recording medium includes all types of recording devices in which data readable by a computer system is stored. The computer-readable recording medium may be non-volatile or non-transitory mediums, such as ROM, CD-ROM, magnetic tape, floppy disk, memory card, hard disk, magneto-optical disk, and storage device and may further include a transitory medium such as a data transmission medium. In addition, the computer-readable recording medium may be distributed in a network-connected computer system, and a computer-readable code may be stored and executed in a distributed manner.

Various implementations of the systems and techniques described herein may be implemented by a programmable computer. Here, the computer includes a programmable processor, a data storage system (including volatile memory, non-volatile memory, or other types of storage systems, or combinations thereof), and at least one communication interface. For example, the programmable computer may be one of a server, a network appliance, a set-top box, an embedded device, a computer expansion module, a personal computer, a laptop, a personal data assistant (PDA), a cloud computing system, or a mobile device.

According to some embodiments of the present disclosure, the apparatus and method for detecting lane using LiDAR can accurately detect a lane existing in front of the vehicle even under illuminance environment conditions unfavorable to lane detection.

According to some embodiments of the present disclosure, the apparatus and method for detecting lane using LiDAR can accurately detect various types of lanes and provide reliable lane information without an algorithm to cope with various and variable road conditions.

The apparatuses, devices, units, modules, and components described herein are implemented by hardware components. Examples of hardware components that may be used to perform the operations described in this application where appropriate include controllers, sensors, generators, drivers, memories, comparators, arithmetic logic units, adders, subtractors, multipliers, dividers, integrators, and any other electronic components configured to perform the operations described in this application. In other examples, one or more of the hardware components that perform the operations described in this application are implemented by computing hardware, for example, by one or more processors or computers. A processor or computer may be implemented by one or more processing elements, such as an array of logic gates, a controller and an arithmetic logic unit, a digital signal processor, a microcomputer, a programmable logic controller, a field-programmable gate array, a programmable logic array, a microprocessor, or any other device or combination of devices that is configured to respond to and execute instructions in a defined manner to achieve a desired result. In one example, a processor or computer includes, or is connected to, one or more memories storing instructions or software that are executed by the processor or computer. Hardware components implemented by a processor or computer may execute instructions or software, such as an operating system (OS) and one or more software applications that run on the OS, to perform the operations described in this application. The hardware components may also access, manipulate, process, create, and store data in response to execution of the instructions or software. For simplicity, the singular term "processor" or "computer" may be used in the description of the examples described in this application, but in other examples multiple processors or computers may be used, or a processor or computer may include multiple processing elements, or multiple types of processing elements, or both. For example, a single hardware component or two or more hardware components may be implemented by a single processor, or two or more processors, or a processor and a controller. One or more hardware components may be implemented by one or more processors, or a processor and a controller, and one or more other hardware components may be implemented by one or more other processors, or another processor and another controller. One or more processors, or a processor and a controller, may implement a single hardware component, or two or more hardware components. A hardware component may have any one or more of different processing configurations, examples of which include a single processor, independent processors, parallel processors, single-instruction single-data (SISD) multiprocessing, single-instruction multiple-data (SIMD) multiprocessing, multiple-instruction single-data (MISD) multiprocessing, multiple-instruction multiple-data (MIMD) multiprocessing, a controller and an arithmetic logic unit (ALU), a DSP, a microcomputer, an application-specific integrated circuit (ASIC), a field programmable gate array (FPGA), a programmable logic unit (PLU), a central processing unit (CPU), a graphics processing unit (GPU), a neural processing unit (NPU), or any other device capable of responding to and executing instructions in a defined manner.

The methods that perform the operations described in this application are performed by computing hardware, for example, by one or more processors or computers, implemented as described above executing instructions or software to perform the operations described in this application that are performed by the methods. For example, a single operation or two or more operations may be performed by a single processor, or two or more processors, or a processor and a controller. One or more operations may be performed by one or more processors, or a processor and a controller, and one or more other operations may be performed by one or more other processors, or another processor and another controller. One or more processors, or a processor and a controller, may perform a single operation, or two or more operations.

Instructions or software to control a processor or computer to implement the hardware components and perform the methods as described above are written as computer programs, code segments, instructions or any combination thereof, for individually or collectively instructing or configuring the processor or computer to operate as a machine or special-purpose computer to perform the operations performed by the hardware components and the methods as described above. In one example, the instructions or software include machine code that is directly executed by the processor or computer, such as machine code produced by a compiler. In another example, the instructions or software include higher-level code that is executed by the processor or computer using an interpreter. Programmers of ordinary skill in the art can readily write the instructions or software based on the block diagrams and the flow charts illustrated in the drawings and the corresponding descriptions in the specification, which disclose algorithms for performing the operations performed by the hardware components and the methods as described above.

The instructions or software to control a processor or computer to implement the hardware components and perform the methods as described above, and any associated data, data files, and data structures, are recorded, stored, or fixed in or on one or more non-transitory computer-readable storage media. Examples of a non-transitory computer-readable storage medium include read-only memory (ROM), random-access programmable read only memory (PROM), electrically erasable programmable read-only memory (EEPROM), random-access memory (RAM), magnetic RAM (MRAM), spin-transfer torque(STT)-MRAM, static random-access memory (SRAM), thyristor RAM (T-RAM), zero capacitor RAM (Z-RAM), twin transistor RAM (TTRAM), conductive bridging RAM(CBRAM), ferroelectric RAM (FeRAM), phase change RAM (PRAM), resistive RAM(RRAM), nanotube RRAM, polymer RAM (PoRAM), nano floating gate Memory(NFGM), holographic memory, molecular electronic memory device, insulator resistance change memory, dynamic random access memory (DRAM), static random access memory (SRAM), flash memory, non-volatile memory, CD-ROMs, CD-Rs, CD+Rs, CD-RWs, CD+RWs, DVD-ROMs, DVD-Rs, DVD+Rs, DVD-RWs, DVD+RWs, DVD-RAMs, BD-ROMs, BD-Rs, BD-R LTHs, BD-REs, blue-ray or optical disk storage, hard disk drive (HDD), solid state drive (SSD), flash memory, a card type memory such as multimedia card micro or a card (for example, secure digital (SD) or extreme digital (XD)), magnetic tapes, floppy disks, magneto-optical data storage devices, optical data storage devices, hard disks, solid-state disks, and any other device that is configured to store the instructions or software and any associated data, data files, and data structures in a non-transitory manner and providing the instructions or software and any associated data, data files, and data structures to a processor or computer so that the processor or computer can execute the instructions. In an example, the instructions or software and any associated data, data files, and data structures are distributed over network-coupled computer systems so that the instructions and software and any associated data, data files, and data structures are stored, accessed, and executed in a distributed fashion by the one or more processors or computers.

While this disclosure includes specific examples, it will be apparent after an understanding of the disclosure of this application that various changes in form and details may be made in these examples without departing from the spirit and scope of the claims and their equivalents. The examples described herein are to be considered in a descriptive sense only, and not for purposes of limitation. Descriptions of features or aspects in each example are to be considered as being applicable to similar features or aspects in other examples. Suitable results may be achieved if the described techniques are performed in a different order, and/or if components in a described system, architecture, device, or circuit are combined in a different manner, and/or replaced or supplemented by other components or their equivalents.

Therefore, the scope of the disclosure is defined not by the detailed description, but by the claims and their equivalents, and all variations within the scope of the claims and their equivalents are to be construed as being included in the disclosure.

**Claims**

1. An apparatus for detecting a lane using a light detection and ranging (LiDAR), the apparatus comprising:
a processor configured to

   generate a range image based on a LiDAR point cloud acquired from the LiDAR, and
   acquire at least one lane data by detecting at least one lane area present in the range image using a trained lane detection model.

2. The apparatus of claim 1, wherein the processor is further configured to

   extract at least one feature from the range image using a first model,
   detect a point set predicted as the at least one lane area based on the at least one feature using a second model, and
   acquire the at least one lane data corresponding to the point set.

3. The apparatus of claim 1, wherein the at least one lane data comprises any one or any combination of a confidence score of the at least one lane area, an upper endpoint value of the at least one lane area, a lower endpoint value of the at least one lane area, and a polynomial coefficient for the at least one lane area.

4. The apparatus of claim 1, wherein the processor is further configured to display a lane on the LiDAR point cloud using the at least one lane data.

5. The apparatus of claim 1, further comprising a memory configured to store one or more instructions, and the processor is further configured to execute the one or more instructions to generate the range image and to acquire the at least one lane data.

6. A processor-implemented method for detecting a lane using a light detection and ranging, LiDAR, the method comprising:

   generating a range image based on a LiDAR point cloud acquired from the LiDAR; and
   acquiring at least one lane data by detecting at least one lane area present in the range image using a trained lane detection model.

7. The method of claim 6, wherein the acquiring of the at least one lane data comprises:

   extracting at least one feature from the range image using a first model;
   detecting a point set predicted as the at least one lane area based on the at least one feature using a second model; and

acquiring the at least one lane data corresponding to the point set.

8.  The method of claim 6, wherein
the at least one lane data comprises any one or any combination of confidence scores of the at least one lane area, an upper endpoint value of the at least one lane area, a lower endpoint value of the at least one lane area, and a polynomial coefficient for the at least one lane area.

9.  The method of claim 6, further comprising:
displaying a lane on the LiDAR point cloud using the at least one lane data.

10. A processor-implemented method for training a lane detection model using a light detection and ranging, LiDAR, the method comprising:

generating a range image based on a plurality of LiDAR point clouds;
acquiring at least one lane data by predicting at least one lane present in the range image using a lane detection model;
calculating a loss based on a ground truth lane data and the at least one lane data using a loss function; and
updating at least one weight of the lane detection model based on the loss.

11. The method of claim 10, wherein the LiDAR point cloud comprises at least one annotated lane.

12. The method of claim 10, wherein the loss function calculates the loss using any one or any combination of a loss function associated with a confidence score of the at least one lane data, a loss function associated with an upper endpoint value of the at least one lane, a loss function associated with a lower endpoint value of the at least one lane, and a loss function associated with a polynomial coefficient for the at least one lane.

13. The method of claim 12, wherein each of the loss function associated with the confidence score of the at least one lane data, the loss function associated with the upper endpoint value of the at least one lane, the loss function associated with the lower endpoint value of the at least one lane, and the loss function associated with the polynomial coefficient for the at least one lane is combined with a balance weight for each corresponding loss function.

14. The method of claim 12, wherein the loss function associated with the confidence score of the at least one lane data calculates the loss using a binary cross entropy.

15. The method of claim 12, wherein the loss function associated with the upper endpoint value of the at least one lane, the loss function associated with the lower endpoint value of the at least one lane, and the loss function associated with the polynomial coefficient for the at least one lane calculates the loss using a mean squared error.

*100*

```
┌─────────────────────────────────────────────┐
│                                              │
│  ┌──────────────┐                            │
│  │              │            *130*           │
│  │  processor   │──┐      ┌────────────────┐ │
│  │              │  │   ┌──│ lane detection │ │
│  └──────────────┘  │   │  │     model      │ │
│    *120*    *110*  ├───┤  └────────────────┘ │
│  ┌──────────────┐  │   │                     │
│  │              │  │   │                     │
│  │   memory     │──┘   └  *140*              │
│  │              │                            │
│  └──────────────┘                            │
│                                              │
└─────────────────────────────────────────────┘
```

# FIG. 1

*200*

*210*

```
┌──────────────┐     ┌──────────────┐     ┌───────────────┐     ┌──────────────┐
│              │     │              │     │               │     │              │
│ range image  │────▶│ first model  │────▶│ second model  │────▶│  lane data   │
│              │     │              │     │               │     │              │
└──────────────┘     └──────────────┘     └───────────────┘     └──────────────┘
```

*220*        *230*        *240*

# FIG. 2

*300*

*310*　　　　*320*　　　　*330*　　　　*340*

```
learning data  →  first model  →  second model  →  loss function
```

*345*

# FIG. 3

*FIG. 4*

start

generate range image based on LiDAR point cloud — S500

detect lane area using trained lane detection model — S510

acquire lane data for detected lane area — S520

display lane on LiDAR point cloud based on lane data — S530

end

# FIG. 5

Europäisches
Patentamt

European
Patent Office

Office européen
des brevets

**EUROPEAN SEARCH REPORT**

Application Number

EP 22 16 0719

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2020/302662 A1 (HOMAYOUNFAR NAMDAR [CA] ET AL) 24 September 2020 (2020-09-24) <br> * paragraphs [0039] - [0126] * <br> ----- | 1-15 | INV. <br> G01S17/89 <br> G06V10/44 |
| X | US 2019/035101 A1 (KWANT RICHARD [US] ET AL) 31 January 2019 (2019-01-31) <br> * paragraphs [0033] - [0090] * <br> ----- | 1-15 | |
| X | US 10 346 693 B1 (KIM KYE-HYEON [KR] ET AL) 9 July 2019 (2019-07-09) <br> * column 9 * <br> ----- | 1-15 | |

TECHNICAL FIELDS SEARCHED (IPC)

G01S
G06K
G06V

The present search report has been drawn up for all claims

| Place of search | Date of completion of the search | Examiner |
|---|---|---|
| Munich | 5 August 2022 | Damp, Stephan |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 22 16 0719

This annex lists the patent family members relating to the patent documents cited in the above-mentioned European search report.
The members are as contained in the European Patent Office EDP file on
The European Patent Office is in no way liable for these particulars which are merely given for the purpose of information.

05-08-2022

| Patent document cited in search report | | Publication date | Patent family member(s) | | Publication date |
|---|---|---|---|---|---|
| US 2020302662 | A1 | 24-09-2020 | NONE | | |
| US 2019035101 | A1 | 31-01-2019 | NONE | | |
| US 10346693 | B1 | 09-07-2019 | CN | 111462130 A | 28-07-2020 |
| | | | EP | 3686779 A1 | 29-07-2020 |
| | | | JP | 6895693 B2 | 30-06-2021 |
| | | | JP | 2020119527 A | 06-08-2020 |
| | | | KR | 20200091319 A | 30-07-2020 |
| | | | US | 10346693 B1 | 09-07-2019 |

EPO FORM P0459

For more details about this annex : see Official Journal of the European Patent Office, No. 12/82